# EUROPÄISCHE PATENTSCHRIFT

(11) **EP 2 403 678 B1**
(45) Veröffentlichungstag und Bekanntmachung des Hinweises auf die Patenterteilung: **08.07.2015**
(21) Anmeldenummer: 10705267.2
(22) Anmeldetag: 26.01.2010
(51) Int. Cl.: B23K 3/03, B23K 3/08, H05B 3/84

(54) **LÖTKOPF MIT LÖTELEKTRODEN AUS EINEM WERKSTOFF MIT HOHEM SPEZIFISCHEN ELEKTRISCHEN WIDERSTAND UND MIT EINEM KONISCHEN QUERSCHNITT**
SOLDERING HEAD HAVING SOLDERING ELECTRODES MADE OF A MATERIAL HAVING HIGH SPECIFIC ELECTRICAL RESISTANCE AND HAVING A CONICAL CROSS-SECTION
TÊTE DE BRASAGE MUNIE D'ÉLECTRODES DE BRASAGE EN MATÉRIAU À RÉSISTANCE ÉLECTRIQUE SPÉCIFIQUE ÉLEVÉE ET À SECTION TRANSVERSALE CONIQUE

(30) Priorität: 01.03.2009 DE 102009010840
(43) Veröffentlichungstag der Anmeldung: 11.01.2012
(73) Patentinhaber: FEW Fahrzeugelektrikwerk GmbH & Co. KG, 04442 Zwenkau (DE)
(72) Erfinder: JENRICH, Andre, 4158 Leipzig (DE); HARTMANN, Werner, 04205 Leipzig (DE)
(74) Vertreter: Säger, Manfred
(86) Internationale Anmeldenummer: PCT/EP2010/000464
(87) Internationale Veröffentlichungsnummer: WO 2010/099851

(56) Entgegenhaltungen:
- GB-A- 551 338
- GB-A- 985 927
- GB-A- 2 137 130
- US-A- 2 604 571
- US-A- 2 876 328
- US-A- 3 032 637

## Beschreibung

Die Erfindung betrifft einen gattungsgemäßen Lötkopf nach dem Oberbegriff des Hauptanspruchs (siehe, z.B., US 2 604 571), namlich Lötkopf mit zwei, vorzugsweise zueinander parallelen Lötelektroden aus einem elektrisch leitfähigen Werkstoff zum Auflöten von Lötkontakten mit geringer Masse, vorzugsweise Aderendhülsen, auf den Silberaufdruck von Autoglasscheiben, *wobei die zwei Lötelektroden aus einem Werkstoff mit hohem spezifischem elektrischem Widerstand bestehen und jede Lötelektrode vor ihrem Ende unter Verkleinerung ihres Querschnittes konisch zuläuft*.

Solche Lötköpfe dienen zum Erwärmen des Lötkontaktes, wenn sie darauf aufgesetzt werden, um dann per Kurzschluss durch den Lötkontakt dieses mittels des Übergangswiderstandes beim Stromfluss zu erwärmen. Diese Lötköpfe haben sich beim Löten von Lötkontakten mit großer Masse bewährt.

Der Erfindung liegt deshalb die Aufgabe zugrunde, *mittels* eines gattungsgemäßen Lötkopfs nach dem Oberbegriff des Hauptanspruchs auch *beim* Löten von Lötkontakten geringer Masse, wie Aderendhülsen, *eine schnellere Lötfolge zu gewährleisten*.

Diese Aufgabe wird bei einem gattungsgemäßen Lötkopf nach dem Oberbegriff des Anspruchs 1 erfindungsgemäß durch dessen kennzeichnende Merkmale gelöst.

Durch die erfindungsgemäße Ausgestaltung wird infolge der Querschnittsverringerung an jeder Lötelektrode zu deren Ende hin eine Vergrößerung des elektrischen Widerstandes des Werkstoffes mit dem hohen spezifischen elektrischen Widerstand und dadurch dort eine stärkere Erwärmung also an genau der Stelle bewirkt, an der gelötet werden soll. Die Spitzen der Elektroden werden also an ihrem spitz zulaufenden Ende erwärmt und übertragen die Eigenwärme sekundenschnell auf die Aderendhülse. Hierbei kann das Ende der Elektrode vollständig spitz oder aber stumpf mit einer Kontaktfläche enden; wichtig ist in letzterem Fall, dass sich unmittelbar vor dem stumpfen Ende der konische Bereich befindet.

Mit Vorteil ist der Lötkopf durch eine Ausbildung an einem Handlötgerät gekennzeichnet.

Außerdem *ist* gemäß der Erfindung jede der Lötelektroden mit dem hohen spezifischen elektrischen Widerstand aus Kanthaldraht gebildet.

Um eine schnelle Lötfolge zu gewährleisten, *ist* der Lötkopf mit einem Druckluftanschluss zum Zwecke der Kühlung der Lötkontakte versehen.

## Patentansprüche

1. Lötkopf mit zwei Lötelektroden aus einem elektrisch leitfähigen Werkstoff zum Auflöten von Lötkontakten mit geringer Masse auf den Silberaufdruck von Autoglasscheiben, wobei die zwei Lötelektroden aus einem Werkstoff mit hohem spezifischem elektrischem Widerstand bestehen und jede Lötelektrode vor ihrem Ende unter Verkleinerung ihres Querschnittes konisch zuläuft,
**dadurch gekennzeichnet,**
**dass** der Werkstoff mit hohem spezifischem elektrischem Widerstand der zwei Lötelektroden als Kanthaldraht ausgebildet ist und dass der Lötkopf mit einem Druckluftanschluss zum Zwecke der Kühlung der Lötkontakte versehen ist.

2. Lötkopf gemäß Anspruch 1, **dadurch gekennzeichnet, dass** *die beiden Lötelektroden zuein ander parallel sind.*

3. *Handlötgerät, **gekennzeichnet durch** einen Lötkopf gemäß Anspruch 1 oder 2*.

## Claims

1. Soldering head having two soldering electrodes made of an electrically conductive material for soldering low-mass solder contacts to the silver printing on car windows, the two soldering electrodes being made of a material with a high specific electrical resistance, and each soldering electrode tapering conically before its end, thereby decreasing in cross-section,
**characterised in that**
the material with a high specific electrical resistance of the two soldering electrodes takes the form of Kanthal wire and the soldering head is provided with a compressed air connection for the purpose of cooling the solder contacts.

2. Soldering head according to claim 1, **characterised in that** the two soldering electrodes are parallel to each other.

3. Hand-held soldering device, **characterised by** a soldering head according to claim 1 or 2.

## Revendications

1. Tête de brasage pourvue de deux électrodes de brasage en matériau électroconducteur destinées à braser des contacts de brasage de masse minime sur l'impression argent de vitres de voiture, les deux électrodes de brasage étant constituées d'un matériau à résistance électrique spécifique élevée et chaque électrode s'effilant de manière conique avant son extrémité avec diminution de sa section transversale,
**caractérisée en ce que**
le matériau à résistance électrique spécifique élevée des deux électrodes de brasage est réalisé sous la forme d'un fil kanthal et **en ce que** la tête de brasage est pourvue d'une alimentation en air comprimé permettant le refroidissement des contacts de brasage.

2. Tête de brasage selon la revendication 1, **caractérisée en ce que** les deux électrodes de brasage sont parallèles l'une à l'autre.

3. Poste de brasage manuel, **caractérisé par** une tête de brasage selon la revendication 1 ou 2.
